# EUROPEAN PATENT APPLICATION

(11) **EP 2 251 768 A2**
(43) Date of publication of application: **17.11.2010**
(21) Application number: 10162224.9
(22) Date of filing: 07.05.2010
(51) Int. Cl.: G06F 3/01, G06F 3/033

(54) **Rotary input device with haptic feedback**

(30) Priority: 11.05.2009 JP 2009114258
(71) Applicant: Funai Electric Co., Ltd., Daito-shi, Osaka 574-0013 (JP); Pro-tech Design Corporation, Osachi Okaya-shi Nagano 394-0081 (JP)
(72) Inventor: Nagashima, Kenji, Osaka 574-0013 (JP); Tsubota, Hirono, Osaka 574-0013 (JP); Suzuki, Takahiko, Nagano 394-0081 (JP); Kodaira, Takeshi, Nagano 394-0081 (JP)
(74) Representative: Grünecker, Kinkeldey, Stockmair & Schwanhäusser Anwaltssozietät

(57) **Abstract**

Disclosed is a feeling applicator including a rotation controller for receiving a rotating operation of an operator so as to rotate around an axis, a rotation detection unit for detecting a rotation of the rotation controller, a rotation drive unit for applying a rotary force to the rotation controller and a rotation control unit for applying a predetermined tactile feeling to the operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when the rotation of the rotation controller is detected by the rotation detection unit.

## Description

### BACKGROUND OF THE INVENTION

### 1. Field of the Invention

The present invention relates to a feeling applicator and an electronic device.

### 2. Description of Related Art

Conventionally, there is known an input device which is adopted in electronic devices such as a portable terminal device, an audio-visual device, a personal computer and the like and which carries out an input operation by a rotating operation of a rotation controller. In such input device, the selection items which are displayed in the display screen of the electronic device are to be switched and selected in order in conjunction with the rotation of the rotation controller. After an operator manually rotates the rotation controller until the targeted selection item is selected, the operator carries out an operation to decide on the selection to input an instruction according to the selected selection item.

However, in the above described input device, each of the selection items in the screen is switched and selected by merely carrying out the rotating operation of the rotation controller. Therefore, there is a problem that it is difficult for an operator to recognize that the selection item in the screen is selected through feeling of hands and fingers.

In view of the above problem, in order to give an operator a tactile operational feeling, there is suggested a device in which a drive motor to carry out the rotating control of a job dial (rotation controller) is provided and which switches between a control to apply a bias rotary force in the same direction as the rotation direction of the jog dial, a control to apply a load rotary force in the opposite direction of the rotation direction of the jog dial and a control to make the jog dial rotate freely without supplying drive voltage to the drive motor according to the rotational position of the jog dial and executes the control (see, JP2003-228455).

In the device of JP2003-228455, however, regardless of which screen is being displayed in the display screen of the display unit, the bias rotation is carried out in the jog dial in a section approximating the selection component (selection item), the jog dial rotates freely in a section in which the selection component is selected and the lead rotation is carried out in the jog dial in a section passed the selection component. Therefore, in the device of JP2003-228455, although feeling of that each selection component is selected can be given to an operator, only a fixed operational feeling is given to an operator at any time and various types of operational feelings according to the screen displays of the display unit cannot be realized.

### SUMMARY OF THE INVENTION

It is, therefore, a main object of the present invention to provide a feeling applicator and an electronic device which can give an operator various types of operational feelings in conjunction with the screen displays in the display unit.

According to a first aspect of the present invention, there is provided a feeling applicator including a rotation controller for receiving a rotating operation of an operator so as to rotate around an axis, a rotation detection unit for detecting a rotation of the rotation controller, a rotation drive unit for applying a rotary force to the rotation controller and a rotation control unit for applying a predetermined tactile feeling to the operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when the rotation of the rotation controller is detected by the rotation detection unit.

According to a second aspect of the present invention, there is provided a feeling applicator including an operation board formed of a soft material, a feeling applicator for applying a tactile feeling to the operation board, a detection unit for detecting an operation of an operator to the operation board and a drive control unit for applying a predetermined tactile feeling to the operator via the operation board by applying the tactile feeling to the operation board by the feeling applicator in conjunction with a screen display in a display screen of a display unit when the operation of the operator to the operation board is detected by the detection unit.

According to a third aspect of the present invention, there is provided an electronic device including the feeling applicator and the display unit.

According to a fourth aspect of the present invention, there is provided an electronic device including a display unit, a rotation controller for receiving a rotating operation of an operator so as to rotate around an axis, a rotation detection unit for detecting a rotation speed and/or a rotation direction of the rotation controller, a pressure detection unit for detecting an intensity of a pressure in an axis direction to the rotation controller, a rotation drive unit for applying a rotary force to the rotation controller and a rotation control unit for applying a predetermined tactile feeling to an operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when a rotation of the rotation controller is detected by the rotation detection unit, and the rotation control unit changes the rotary force to be applied to the rotation controller according to the rotation speed and/or the rotation direction of the rotation controller detected by the rotation detection unit and the intensity of the pressure detected by the pressure detection unit.

According to a fifth aspect of the present invention, there is provided an electric device including a display unit, an operation board formed of a soft material, a feeling application unit for applying a tactile feeling to the operation board, a detection unit for detection an operation of an operator to the operation board and a drive control unit for applying a predetermined tactile feeling to the operator via the operation board by applying the tactile feeling to the operation board by the feeling application unit in conjunction with a screen display in a display screen of the display unit when the operation of the operator to the operation board is detected by the detection unit.

According to the present invention, when an operation of an operator is carried out in a rotation controller or in an operation board, a predetermined tactile feeling is given to an operator by the rotation drive unit or the feeling applying unit in conjunction with the display screen in the display unit. Therefore, in the feeling applicator and the electronic device, various types of operational feelings in conjunction with screen displays in the display unit can be given to an operator.

### BRIEF DESCRIPTION OF THE DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a block diagram of a mobile phone including a feeling applicator of the first embodiment in which the present invention is applied;
FIG. 2 is a schematic diagram showing a functional structure of the mobile phone of the first embodiment;
FIG. 3 is a schematic diagram of the feeling applicator of the first embodiment;
FIG. 4 is a cross-sectional diagram cut along a line IV-IV of FIG. 3;
FIG. 5 is an exploded diagram of the feeling applicator of the first embodiment;
FIG. 6 is an example of a selection screen which is displayed in a display screen of a display unit;
FIG. 7 is an example of the selection screen which is displayed in the display screen of the display unit;
FIG. 8 is an example of the selection screen which is displayed in the display screen of the display unit;
FIG. 9 is an example of the selection screen which is displayed in the display screen of the display unit;
FIG. 10 is a schematic diagram of a feeling applicator of the second embodiment;
FIG. 11 is a block diagram showing a functional structure of a mobile phone of the second embodiment;
FIG. 12 is a cross-sectional diagram cut along a line XII-XII of FIG. 10; and
FIG. 13 is an exploded diagram of the feeling applicator of the second embodiment.

### DESCRIPTION OF THE PREFERRED EMBODIMENTS

Hereinafter, an embodiment of the present invention will be described with reference to the drawings. Here, scope of the present invention is not limited to the embodiment and the illustrated examples which are shown hereinafter.

In the following description, a mobile phone to make voice calls by a wireless communication will be described as an example of an electronic device of the present invention.

### [First embodiment]

First, a mobile phone of the first embodiment in which the present invention is applied will be described.

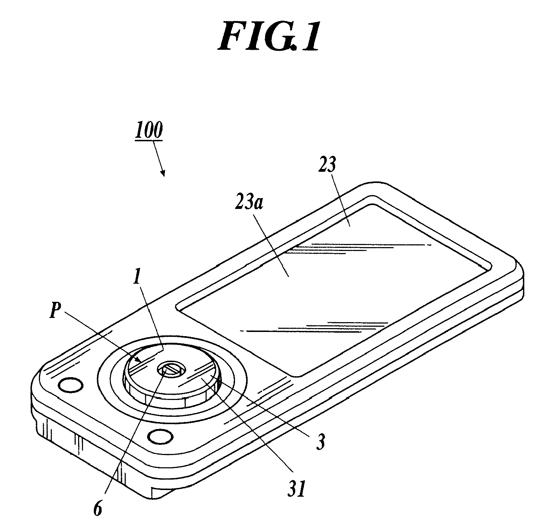

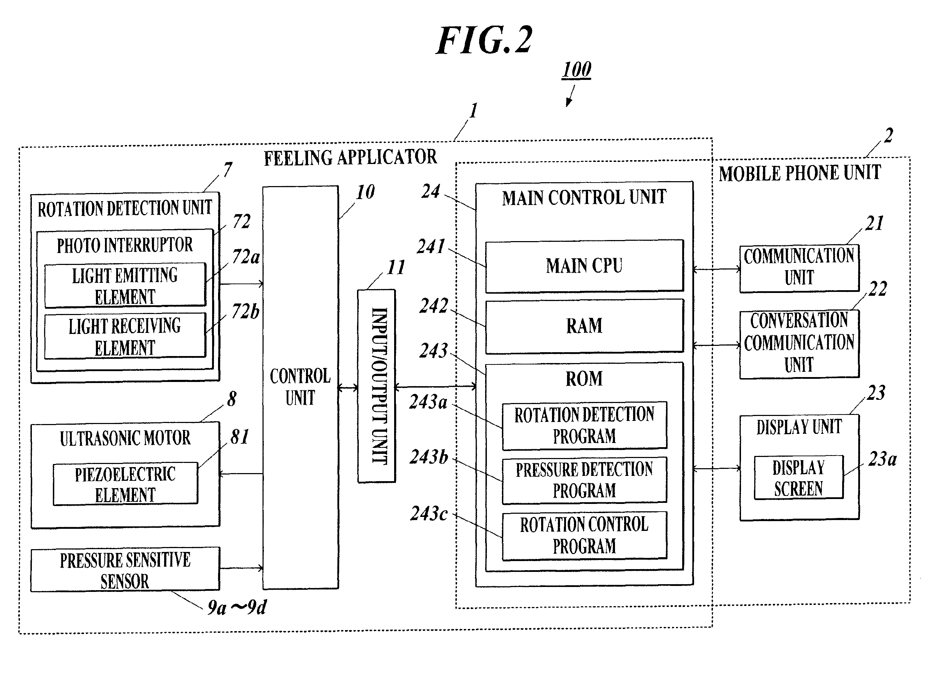

As shown in FIGS. 1 and 2, the mobile phone 100 of the first embodiment includes a feeling applicator 1 for an operator to carry out an input operation and a mobile phone unit 2 which is connected with the feeling applicator 1 and which is operated by the feeling applicator 1.

First, the feeling applicator 1 according to the first embodiment will be described.

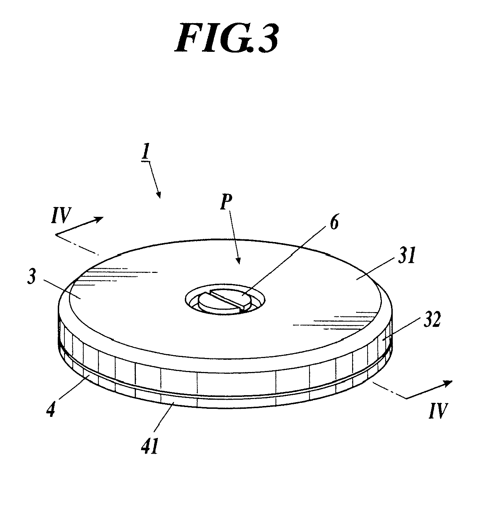

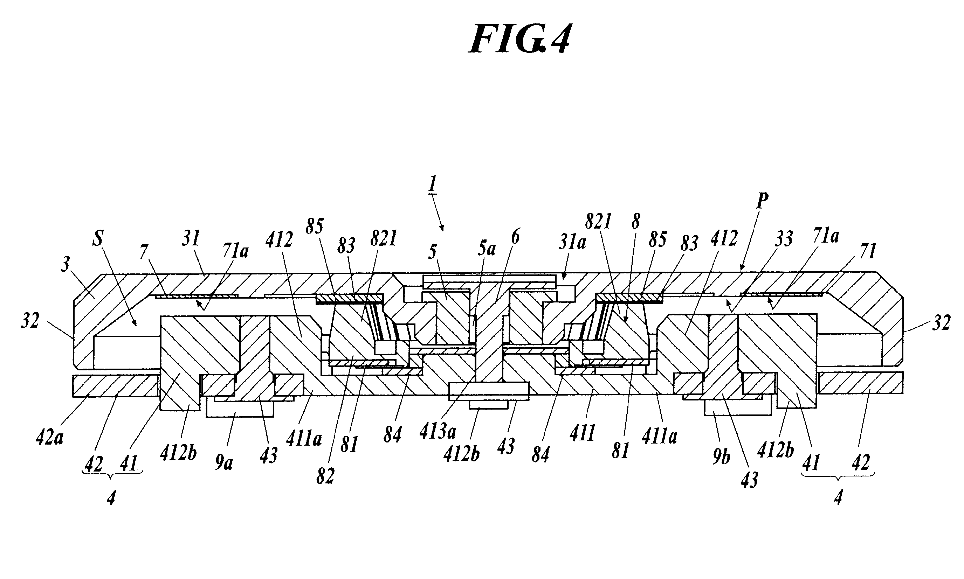

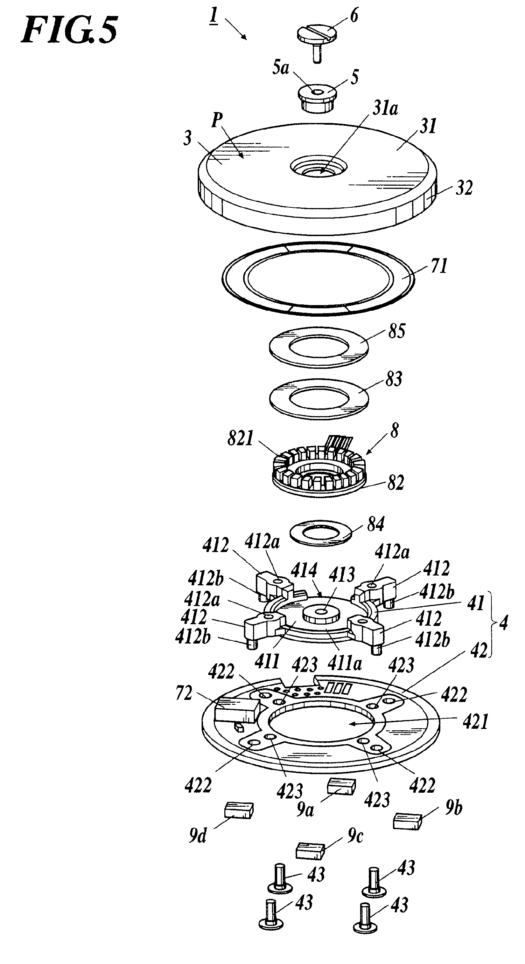

As shown in FIGS. 2 to 5, the feeling applicator 1 includes a rotation controller 3 which can be manually rotated by an operator and a support base 4 which is provided in the bottom surface side of the rotation controller 3 and which supports the rotation controller 3 so as to rotate, and the entire feeing applicator 1 has an approximately disk-like shape.

The rotational controller 3 includes an upper surface unit 31 of a circular-shape having an opening 31a at the center thereof and a circumference unit 32 which protrudes downward from the edge portion of the upper surface unit 31 along the entire circumference, and the rotation controller 3 forms the upper surface and the circumference surface of the feeling applicator 1 by being provided at a position covering the upper side of the support base 4. The upper surface unit 31 is an operation surface P for an operator to carry out a rotating operation, and an operator carries out an input operation to the mobile phone unit 2 by rotating the rotation controller 3 while holding a point in the upper surface unit 31 with a fingertip or by pinching the circumference unit 32. The rotation controller 3 may be formed with a material having a heat dissipation characteristic such as aluminum or a material having a high tolerance to impact from outside, for example. Further, the rotation controller 3 may be formed with a resin or the like.

The support base 4 includes a base 41 and a PCB substrate 42 which is connected to the base 41, and the support base 4 forms the bottom surface of the feeling applicator 1 by being provided at a position covering the opening of the bottom side of the rotation controller 3.

The base 41 includes a pedestal 411 of an approximately donut-disk shape having an opening at the center thereof and four extending units 412 which extend outside from the margin 411a of the pedestal 411, and a screw hole 412a for screwing a screw and a protrusion 412b to extends downward from the lower surface more in outside than the screw hole 412a are provided at each of the extending portions 412. The base 41 is formed of a material such as polycarbonate, for example.

The PCB substrate 42 is formed in a flat circular ring shape having approximately same diameter as the rotation controller 3, and the pedestal 411 of the base 41 is fitted and attached at an approximately center in the opening 421. Further, mounting holes 422 for attaching protrusions 412b which are provided so as to protrude at the lower surface of each of the extending units 412 of the base 41 are provided at the PCB substrate 42. Furthermore, the PCB substrate 42 and the base 41 are integrally connected by mounting the pedestal 411 of the base 41 in the opening 421 of the PCB substrate 42 so as to be fitted and by fitting each of the protrusions 412b of the base 41 in each of the mounting holes 422 of the PCB substrate 42.

Moreover, four holes 423 in which the diameter is slightly larger than the screw holes 412a are provided at the PCB substrate 42 at positions overlapping the screw holes 412a of the base 41 so as to correspond to each of the screw holes 412a. The PCB substrate 42 and the base 41 are fixed to each other by screws 43 such as thin cap screws being screwed with the screw holes 412a of the base 41 from the lower surface side of the PCB substrate 42 via the holes 423 of the PCB substrate 42.

Further, four pressure sensitive sensors (pressure detection units) 9a to 9d for detecting the pressure of the rotating operation of an operator are disposed at the back side 42a of the PCB substrate 42.

Furthermore, a bearing 5 is disposed at the inner circumference of the opening 31a of the upper surface section 31 of the rotation controller 3 and a through hole 5a in which a screw 6 which becomes the rotation axis (axis) of the rotation controller 3 is provided at the center of the bearing 5. Moreover, the screw 6 and the support base 4 are fixed to each other by the screw 6 such as a countersunk screw or the like is inserted in the through hole 5a of the bearing 5 from the upper side of the rotation controller 3 and by the lower end of the screw 6 protruding downward being screwed to the female screw 413a which is formed at the inner circumference of the opening 413 at the center of the base 41. In such way, the rotation controller 3 is connected to the support base 4 so as to rotate freely around the screw 6.

Moreover, a space S is formed between the rotation controller 3 and the support base 4. In the space S, a rotation detection unit (rotation detection device) 7 for detecting the rotation angle of the rotation controller 3, an ultrasonic motor (rotation drive device) 8 for rotating the rotation controller 3, a control unit 10 for controlling each part of the feeling applicator 1, an input/output unit 11 for carrying out sending and receiving of various types of signals with the mobile phone unit 2 and the like are disposed.

The rotation detection section 7 includes a ring-shaped code wheel 71 and a photo interrupter 72 for detecting the rotation angle displacement of the code wheel 71, for example.

The code wheel 71 is fixed at the back side 33 of the upper surface unit 31 of the rotation controller 3 and rotates in conjunction with the rotation of the rotation controller 3. At the lower surface 71a of the code wheel 71, a reflection surface to reflect a light is printed at a predetermined pitch along the circumferential direction in two detection patterns of A phase and B phase.

The photo interrupter 72 is a reflection type photo interrupter which is formed of a light emitting element 72a such as a LED and a light receiving element 72b such as a photo IC. The photo interrupter 72 is mounted on the PCB substrate 42 at a position facing the code wheel 71 and is connected with the control unit 10. Further, the light receiving element 72b includes at least two light receiving surfaces to output the detection signals of A phase and B phase having a phase difference of 90 degrees from each other. The photo interrupter 72 detects the amount of rotation and the rotation direction of the rotation controller 3 to output as the detection signals of A phase and B phase to the control unit 10 by receiving and counting the reflection light of the light which is emitted by the light emitting element 72a toward the code wheel 71 with the light receiving element 72b. In the control unit 10, the rotation speed, rotation direction and rotation angle of the rotation controller 3 are specified based on the detection signals of A phase and B phase detected from the photo interrupter 72 which indicate the amount of rotation and rotation direction of the rotation controller 3.

The ultrasonic motor 8 includes a piezoelectric element 81, a ring-shape stator 82, a rotor 83 which contacts the upper surface of the stator 82 and the like. The ultrasonic motor 8 is driven by the control of the control unit 10 and allows the rotation controller 3 rotate around the screw 6 as a rotation axis.

The stator 82 is engaged with a ring-shape concave portion 414 formed at the upper surface of the base 41 and is fixed to the base 41 by a flat circular ring shape double-faced tape 84. At the upper portion of the stator 82, a plurality of convex portions 821 are disposed along the circumferential direction, further, in the lower surface side of the stator 82, a plurality of piezoelectric elements 81 which generate vibration energy according to application of voltage are disposed along the circumferential direction of the stator 82. The rotor 83 is formed of a material such as high polymer polyethylene, for example, and has a flat circular ring shape. Further, the rotor 83 is disposed at a position in the inner circumference side of the code wheel 71 and at a position so as to be in between the stator 82 and the rotation controller 3.

Moreover, in between the rotation controller 3 and the rotor 83, a flat circular ring shape double-faced tape 85 is disposed, and each face of the double-faced tape 85 is respectively attached to the back side 33 of the rotation controller 3 and the upper surface of the rotor 83. The upper surface of the rotor 83 is attached to the lower surface of the double-faced tape 85 which is attached to the back side 33 of the rotation controller 3, further, the lower surface of the rotor 83 is provided so as to contact the convex portions 821 of the stator 82. The lower surface of the rotor 83 has a high friction coefficient, and the rotor 83 is to rotate in the opposite direction of the direction of progressive wave which is generated by the vibration of the stator 82 which contacts the lower surface of the rotor 83.

Further, when the drive signal is applied to the piezoelectric element 81 by the control unit 10, the entire stator 82 vibrates by the ultrasonic vibration of the piezoelectric element 81 and the progressive wave is transmitted to the rotor 83 and the rotor 83 rotates. Then, the rotary force of the rotor 83 is transmitted to the rotation controller 3, and thereby, the rotation controller 3 rotates. Furthermore, by controlling the drive frequency of the drive signal which is to be applied to the piezoelectric element 81, the intensity of the rotary force by the ultrasonic vibration of the piezoelectric element 81 and the rotation direction of the rotation controller 3 can be set freely.

The double-faced tapes 84 and 85 are formed of a gel material such as acrylic foam or a rubber material, for example. Therefore, the double-faced tapes 84 and 85 which are respectively disposed in the upper side and in the lower side of the stator 82 function as dampers to absorb noise which occurs when the stator 82 is driven.

The pressure sensitive sensors 9a to 9d are fixed at the back side 42a of the PCB substrate 42 so as to have an interval of 90° in the circumferential direction. Each of the pressure sensitive sensors 9a to 9d are connected to the control unit 10 and each of the pressure sensitive sensors 9a to 9d detects the intensity of the pressure in the axis direction applied to the rotation controller 3 at the time of rotating operation of the rotation controller 3 by an operator and outputs the detected intensity of the pressure to the main control unit 24 via the control unit 10. In the main control unit 24, the pressure in the axis direction of the rotating operation is specified based on the pressure detection signals each of which are outputted from the four pressure sensitive sensors 9a to 9d, respectively.

As for the pressure sensitive sensors 9a to 9d, pressure sensitive sensors of a resistive film type, a diffusion type, a film formation type, an electric capacity type, a mechanical type or the like can be used, for example.

Moreover, the above mentioned rotation controller 3, code wheel 71 and rotor 83 are disposed on the same axis and they are made so as to rotate around the screw 6 which is fixed to the support base 4 as the rotation axis.

The control unit 10 includes a CPU (Central Processing Unit), a RAM (Random Access Memory), a ROM (Read Only Memory) (all are omitted from the drawing) and the like, and the control unit 10 is connected with the main control unit 24. The control unit 10 controls each part of the feeling applicator 1 and also carries out sending and receiving of various types of signals with the main control unit 24 via the input/output unit 11.

The input/output unit 11 is connected with the mobile phone unit 2 and transmits detection results and the like of various types of sensors to the main CPU 241 of the mobile phone unit 2.

In particular, the input/output unit 11 outputs the detection signals of A phase and B phase which indicate the amount of rotation and the rotational direction of the rotation controller 3 which are outputted from the photo interrupter 72 of the rotation detection unit 7 and the pressure detection signals which are outputted from the four pressure sensitive sensors 9a to 9d which are disposed at the back side 42a of the PCB substrate 42 to the main control unit 24. Further, from the main control unit 24, the drive signal for driving the ultrasonic motor 8 is inputted to the input/output unit 11.

Next, the mobile phone unit 2 according to the first embodiment will be described.

As shown in FIG. 2, the mobile phone unit 2 includes an antenna (omitted from the drawing), a communication unit 21 for sending and receiving wireless signals with an external device, a speaker (omitted from the drawing), a microphone (omitted from the drawing), a conversation communication unit 22 for carrying out input/output of sound, a display screen 23a, a display unit 23 for displaying various types of screen in the display screen 23a and the main control unit 24 for integrally controlling the entire mobile phone 100. Here, well known techniques are used for the communication unit 21 and for the conversation communication unit 22, therefore, detail descriptions will be omitted.

The display unit 23 includes the display screen 23a such as LCD (Liquid Crystal Display) or the like, and the display unit 23 displays various types of screens in the display screen 23a according to an instruction from the main control unit 24.

The main control unit 24 includes a main CPU (Central Processing Unit) 241, a RAM (Random Access Memory) 242, a ROM (Read Only Memory) 243 and the like, and the main control unit 24 is connected with the control unit 10. The main control unit 24 controls each part of the mobile phone unit 2 based on the input operation signal which is transmitted from the feeling applicator 1.

The main CPU 241 controls the entire mobile phone 100 by reading out the process programs and the like stored in the ROM 243 and expanding the process program in the RAM 242 to execute according to the input signal which is inputted from each part of the mobile phone unit 2 and the feeling applicator 1 and by outputting the control signal to each of the units.

The RAM 242 includes a program storage region for expanding various types of programs which are to be executed by the main CPU 241 and a data storage region for storing input data and process results and the like which are obtained at the time when the process programs are executed, and the RAM 242 is used as a work area of the main CPU 241.

The ROM 243 stores the process programs, data and the like in advance, and for example, the ROM 243 stores a rotation detection program 243a, a pressure detection program 243b, a rotation control program 243c and the like.

The rotation detection program 243a is a program to make the main CPU 241 realize a function to detect the rotation speed and the rotation direction (rotation) of the rotation controller 3. In the present invention, the rotation detection device is structured with the rotation detection program 243a, the main CPU 241 and the rotation detection unit 7.

The pressure detection program 243b is a program to make the main CPU 241 realize a function to detect intensity of the pressure in the axis direction to the rotation controller 3. In the present invention, the pressure detection device is structured with the pressure detection program 243b, the main CPU 241 and the pressure sensitive sensors 9a to 9d.

The rotation control program 243c is a program to make the main CPU 241 realize a function to give an operator a predetermined tactile feeling via the rotation controller 3 by applying rotary force to the rotation controller 3 by executing at least one of the application of rotary force in the normal rotation direction to the rotation controller 3 or the application of rotary force in the reverse rotation direction to the rotation controller 3 by the ultrasonic motor 8 in conjunction with the screen display in the display screen 23a of the display unit 23 when the rotation of the rotation controller is detected in the execution of the rotation detection program 243a. In the embodiment, the rotation control device is structured with the rotation control program 243c and the main CPU 241.

Further, in the embodiment, the feeling applicator of the present invention is structured with the above mentioned rotation detection unit 7, ultrasonic motor 8, pressure sensitive sensors 9a to 9d, control unit 10, input/output unit 11 and main control unit 24.

Here, a tactile feeing by vibration and a tactile feeling by sense of force are included in "a predetermined tactile feeling". The "sense of force" is a feeling of heft to a finger when rotating the rotation controller 3 and is the way of sensing that the rotation is light or that the rotation is heavy. An operator can be provided with more clearer operational feeling by giving the tactile feeling by the sense of force to a fingertip of the operator.

Here, the rotation drive process which is to be carried out by the execution of the above mentioned rotation detection program 243a, pressure detection program 243b and rotation control program 243c will be described, and also, the operation of the mobile phone 100 of the embodiment will be described in detail.

When a screen in which a plurality of selection items are displayed is displayed in the display screen 23a which is included in the mobile phone unit 2 (hereinafter, the screen in the display screen 23a in which a plurality of selection items are displayed is called "selection screen"), an operator selects the targeted selection item among the selection items displayed in the selection screen by rotating the rotation controller 3 while holding a point in the operation surface P of the rotation controller 3. Further, after the targeted selection item is selected by the rotating operation of the rotation controller 3, an operator carries out an input operation to the mobile phone unit 2 by carrying out a deciding operation to decide the selected selection item.

As described above, when the rotating operation is carried out to the rotation controller 3 by an operator, the detection signals of A phase and B phase indicting the amount of rotation and the rotation direction of the rotation controller 3 are outputted from the rotation detection unit 7 to the main control unit 24 via the control unit 10 and the input/output unit 11. Further, in the main control unit 24, exist/not-exist of rotation of the rotation controller 3 is being monitored based on the signal input from the rotation detection unit 7, and when the detections signals of A phase and B phase are inputted from the rotation detection unit 7, the main control unit 24 determines that the rotation controller 3 rotated. Then, the main control unit 24 outputs the drive signal to the ultrasonic motor 8 to drive the ultrasonic motor 8 to drive the rotation controller 3 so as to rotate so that a predetermined tactile feeling is given to an operator which is operating the rotation controller 3.

Further, in time of driving of the ultrasonic motor 8, the main control unit 24 specifies the rotation direction of the rotation controller 3, the rotation speed of the rotation controller 3 and the pressure in the axis direction to the rotation controller 3 based on the detection signals of A phase and B phase which are inputted from the rotation detection unit 7 and the detection signals which are outputted from the four pressure sensitive sensors 9a to 9b which are disposed at the back side 42a of the PCB substrate 42. Further, the rotary force given to the rotation controller 3 is to be changes based on the specified rotation direction and rotation speed of the rotation controller 3 and the specified pressure in the axis direction to the rotation controller 3.

In particular, the main control unit 24 controls so as to apply the rotary force in the same direction as the rotation direction of the rotation controller 3 or to apply the rotary force in the opposite direction of the rotation direction of the rotation controller 3 in conjunction with the screen display in the display screen based on the rotation direction of the rotation controller 3. Further, the main control unit 24 controls so as to apply the rotary force to the rotation controller 3 in shorter cycle as the rotation speed of the rotation controller 3 becomes faster based on the rotation speed of the rotation controller 3. Furthermore, the main control unit 24 controls so as to apply a larger rotary force to the rotation controller 3 as the pressure in the axis direction to the rotation controller 3 becomes larger based on the pressure in the axis direction to the rotation controller 3.

Moreover, in the main control unit 24, the rotation angle of the rotation controller 3 is specified based on the detection signals indicating the amount of rotation and the rotation angle which are outputted from the rotation detection unit 7, and whether the specified rotation angle is the selected angle which corresponds to the selection item which can be selected in the selection screen or not is monitored. In a case where the rotation angle of the rotation controller 3 is the selected angle which corresponds to the selection item which can be selected in the selection screen, the main control unit 24 generates a switching signal to switch the selection of selection of selection items in the selection screen and outputs the generated switching signal to the display unit 23 to execution the display control to switch the selection item in the selection screen which is displayed in the display screen 23a.

In such way, in the embodiment, the selection items which are displayed in the display screen 23a can be selected by the rotating operation of the rotation controller 3, and also, the rotary force by the drive of the ultrasound motor 8 is to be applied to the rotation controller in conjunction with the rotating operation of the rotation controller 3. Further, the direction, cycle and intensity of the rotary force to be applied to the rotation controller 3 can be changed by changing the direction (rotation direction) in which the rotation controller 3 is rotated, the speed (rotation speed) by which the rotation controller 3 is rotated and intensity of the pressure to the rotation controller 3.

Here, a selecting process of the selection items displayed in the display screen 23a and a rotary force applying process to the rotation controller 3 will be described by using a specific example.

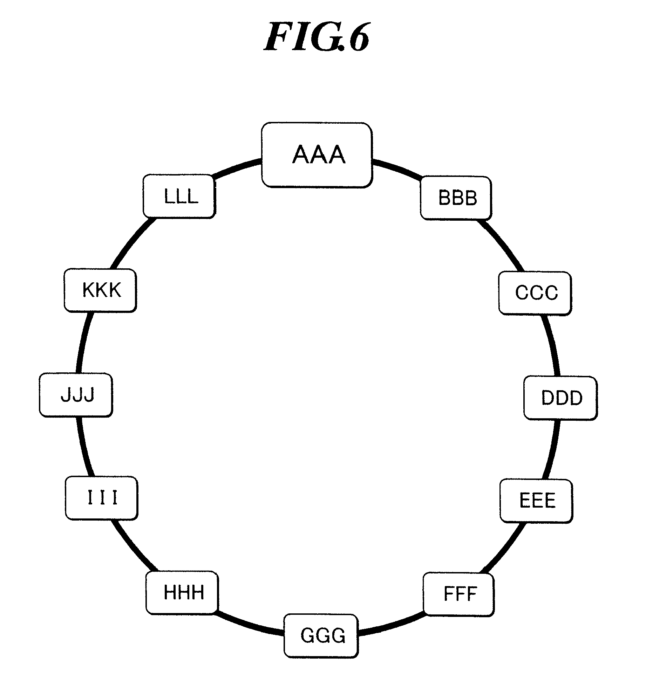

FIG. 6 is an example of the selection screen displayed in the display screen 23a of the display unit 23. In the selection screen of FIG. 6, twelve selection items (selection items which can be selected) are displayed so as to be arranged in a ring shape having equal spaces therebetween. Further, the selection item which is selected (the selection item "AAA" in FIG. 6) among the twelve selection items is displayed so as to be larger than other selection items.

When an operator rotates the rotation controller 3 in the state of the selection screen of FIG. 6, the selection of selection item is switched in order every time when the rotation controller 3 is rotated for 30°.

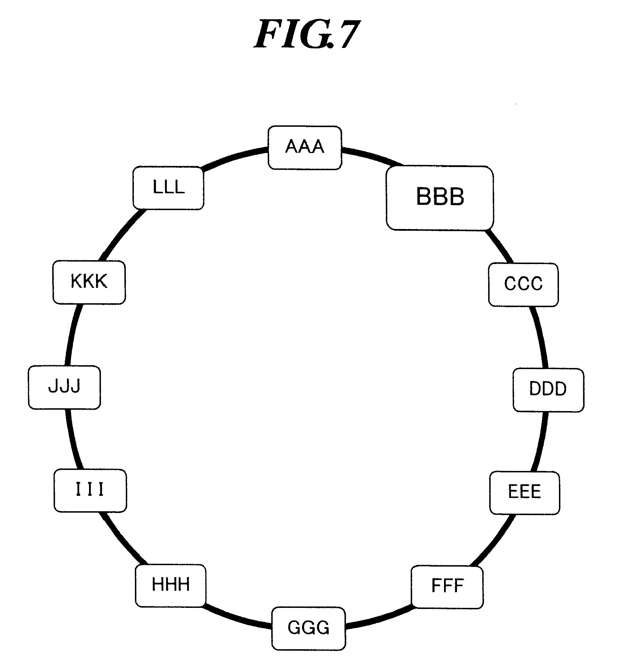

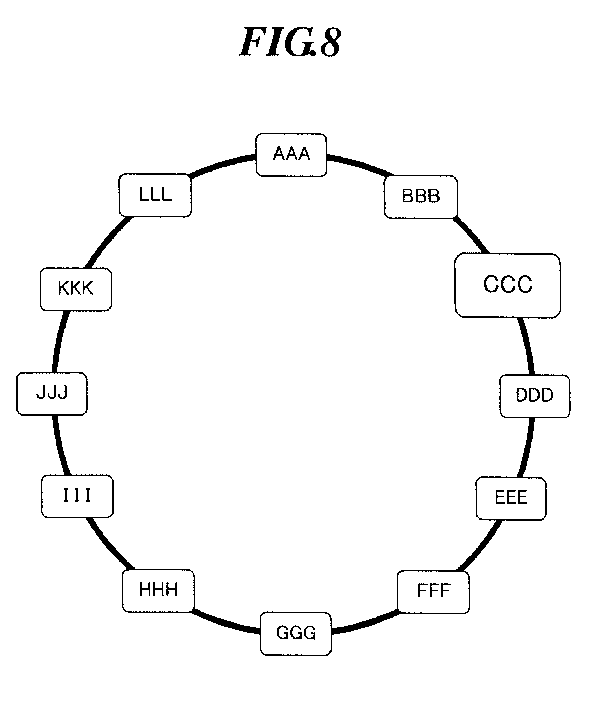

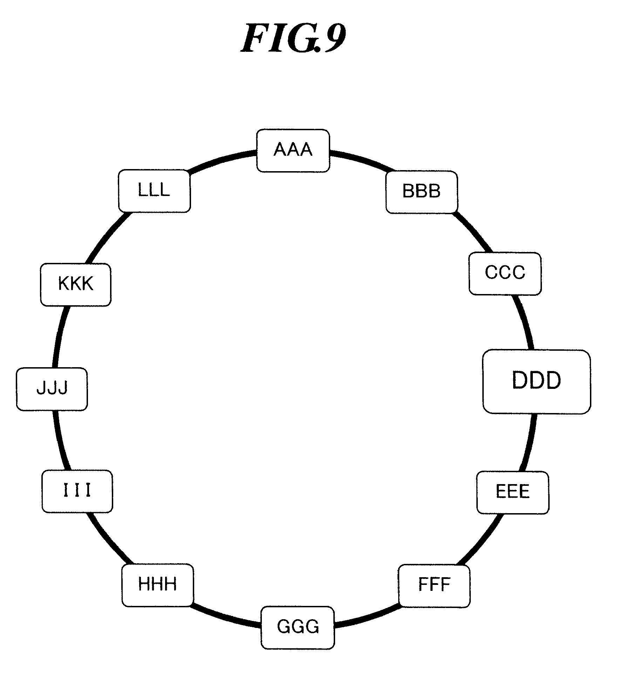

For example, when the rotation angle in which the selection item "AAA" is to be selected is set as the basis ("0°") and when the rotation angle of the rotation controller 3 is at "30°" by an operator rotating the rotation controller 3 for 30° in a clockwise direction, the selection item "BBB" is to be selected as shown in FIG. 7. Further, when an operator rotates the rotation controller 3 for 30° again in the clockwise direction from the rotation angle of "30°" so that the rotation angle of the rotation controller 3 is at "60°", the selection item "CCC" is to be selected as shown in FIG. 8. Furthermore, when an operator rotates the rotation controller 3 for 30° again in the clockwise direction from the rotation angle of "60°" so that the rotation angle of the rotation controller 3 is at "90°", the selection item "DDD" is to be selected as shown in FIG. 9.

In such way, in the selection screen of FIG. 6, the selection item to be selected is to be switched in such way as "AAA" → "BBB" → "CCC" → "DDD" → ... → "LLL" → " AAA" → ... every time an operator rotates the rotation controller 3 for 30° in the clockwise direction. Further, the selection item to be selected is to be switched in such way as "AAA" → "LLL" → "KKK" → "JJJ" → ... → "BBB" → "AAA" → ... every time an operator rotates the rotation controller 3 for 30° in a counter clockwise direction.

Moreover, when an operator rotates the rotation controller 3 in the clockwise direction or in the counter clockwise direction while holding the operation surface P of the rotation controller 3 with a fingertip, the ultrasonic motor 8 is driven by the control of the main control unit 24 to apply rotary force to the rotation controller 3.

In the control of applying rotary force to the rotation controller 3, the main control unit 24 gives a predetermined tactile feeling to an operator according to the screen display by executing the control of applying rotary force in the normal rotation direction to the rotation controller 3 or the control of applying rotary force in the reverse rotation direction to the rotation controller 3 according to the screen display of the selection screen displayed in the display screen 23a.

In particular, in a case where the selection item which is the destination to be switched to is positioned at a position lower than the original selection item in the selection screen, a cyclical rotary force in the same direction as the rotation direction of the rotation controller 3 is applied to the rotation controller 3.

That is, in a case where the selection item which is the destination to be switched to is positioned at a position lower than the original selection item and where an operator rotates the rotation controller 3 in the clockwise direction, rotary force in the normal rotation direction is applied to the rotation controller 3. Further, in a case where the selection item which is the destination to be switched to is positioned at a position lower than the original selection item and where an operator rotates the rotation controller 3 in the counter clockwise direction, rotary force in the reverse rotation direction is applied to the rotation controller 3.

In such way, when the direction of selection switching is downward in the selection screen, rotary force is generated cyclically in the rotation controller 3 in the same direction as the rotation direction of the rotation controller 3. Thereby, the rotation controller 3 rotates smoothly and a smooth tactile feeing and a slippery tactile feeling can be given to a fingertip of an operator.

For example, in a case where the selection item positioned in the right half of the ring displayed in the selection screen of FIG. 6 is to be selected by rotating the rotation controller 3 in the clockwise direction, the selection of selection item is switched in order of "AAA" → "BBB" → "CCC" → "DDD" → "EEE" → "FFF" (see FIGS. 6 to 9) and also, the rotary force (that is, rotary force in normal rotation direction) in the same direction as the rotation of the rotation controller 3 is applied to the rotation controller 3.

Further, for example, in a case where the selection item positioned in the left half of the ring displayed in the selection screen of the FIG. 6 is to be selected by rotating the rotation controller 3 in the counter clockwise direction, the selection of selection item is switched in order of "AAA" → "JJJ" → "III" → "HHH" → "GGG" → "FFF" and also, the rotary force (that is, rotary force in reverse rotation direction) in the same direction as the rotation of the rotation controller 3 is applied to the rotation controller 3.

In such way, a slippery tactile feeling and a smooth tactile feeling can be given to a fingertip of an operator and an operator can sense the feeling of sliding down a slope or skating on ice in accordance with the screen display.

Moreover, in a case where the selection item which is the destination to be switched to is positioned at a position upper than the original selection item in the selection screen, the cyclical rotary force in the opposite direction of the rotation direction of the rotation controller 3 is applied to the rotation controller 3.

That is, in a case where the selection item which is the destination to be switched to is positioned at a position upper than the original selection item and where an operator rotates the rotation controller 3 in the counter clockwise direction, rotary force in the reserve rotation direction is applied to the rotation controller 3. Further, in a case where the selection item which is the destination to be switched to is positioned at a position upper than the original selection item and where an operator rotates the rotation controller 3 in the clockwise direction, rotary force in the normal rotation direction is applied to the rotation controller 3.

In such way, when the direction of selection switching in the selection screen is upward, rotary force is generated cyclically in the opposite direction of the rotation direction of the rotation controller 3 in the rotation controller 3. Thereby, a force which inhibits the rotation of the rotation controller 3 is applied and a rough tactile feeling and a bumpy tactile feeling can be given to a fingertip of an operator.

For example, in a case where the selection item in the left half of the ring displayed in the selection screen of FIG. 6 is to be selected by rotating the rotation controller 3 in the clockwise direction, the selection of selection item is switched in order of "FFF" → "GGG" → "HHH" → "III" → "JJJ" → "AAA" and also, rotary force (that is, rotary force in reverse rotation direction) in opposite direction of the rotation of the rotation controller 3 is applied to the rotation controller 3.

Moreover, for example, in a case where the selection item in the right half of the ring displayed in the selection screen of FIG. 6 is to be selected by rotating the rotation controller 3 in the counter clockwise direction, the selection of selection item is switched in order of "FFF" → "EEE" → "DDD" → "CCC" → "BBB" → "AAA" and also, the rotary force (that is, rotary force in normal rotation direction) in the opposite direction of the rotation of the rotation controller 3 is applied to the rotation controller 3.

In such way, a rough tactile feeling and a bumpy tactile feeling can be given to a fingertip of an operator and an operator can sense the feeling of climbing up a slope or going through a pebbled path in accordance with the screen display.

As described above, direction of the rotary force to be applied to the rotation controller 3 is automatically switched according to the selection switching direction (downward/upward) in the screen display regardless of whether an operator rotates the rotation controller 3 in the clockwise direction or in the counter clockwise direction. Thereby, a tactile feeling matching the screen display can be always given to an operator without being conscious about the direction in which an operator rotates the rotation controller 3.

Moreover, by changing the speed of rotating operation of the rotation controller 3, an operator can adjust the cycle of rotary force to be applied to the rotation controller 3 by the drive of the ultrasonic motor 8.

For example, when an operator increases the rotation speed of the rotation controller 3, in reply, the main control unit 24 determines that the rotation speed of the rotation controller 3 is increased based on the detection signal outputted from the rotation detection unit 7 and the main control unit 24 controls the ultrasonic motor 8 to apply rotary force of shorter cycle to the rotation controller 3.

Further, for example, when an operator decreases the rotation speed of the rotation controller 3, in replay, the main control unit 24 determines that the rotation speed of the rotation controller 3 is decreased based on the detection signal outputted from the rotation detection unit 7 and the main control unit 24 controls the ultrasonic motor 8 to apply rotary force of longer cycle to the rotation controller 3.

In such way, by an operator changing the speed to rotate the rotation controller 3, the cycle of the rotary force to be applied to the rotation controller 3 is changed and the tactile feeing of the rotation controller 3 can be changed.

Here, it can be structures so that intensity of the rotary force to be applied to the rotation controller 3 is changed according to the speed of the rotating operation of the rotation controller 3.

Further, by changing the pressure to the rotation controller 3, an operator can adjust intensity of the rotary force to be applied to the rotation controller 3 by the drive of the ultrasonic motor 8.

For example, when an operator pushes the rotation controller 3 with a greater force, in replay, the main control unit 24 determines that intensity of the pressure in the axis direction to the rotation controller 3 is increased based on the detection signal outputted from each of the pressure sensitive sensors 9a to 9d and the main control unit 24 controls the ultrasonic motor 8 to rotate the rotation controller 3 with a greater rotary force.

Moreover, for example, when an operator pushes the rotation controller 3 with a smaller force, in replay, the main control unit 24 determines that intensity of the pressure in the axis direction to the rotation controller 3 is decreased based on the detection signal outputted from each of the pressure sensitive sensors 9a to 9d and the main control unit 24 controls the ultrasonic motor 8 to rotate the rotation controller 3 with a smaller rotary force.

In such way, by an operator changing the pressure to push the rotation controller 3, intensity of the rotary force to be applied to the rotation controller 3 is changed and the tactile feeling of the rotation controller 3 can be changed.

Here, it can be structured so as to change the cycle of the rotary force to be applied to the rotation controller 3 according to intensity of the pressure in the axis direction to the rotation controller 3.

Moreover, after selecting the targeted selection item by the rotating operation of the rotation controller 3, an operator can decide the selection by pushing the rotation controller with a predetermined pressure.

For example, when an operator pushes the rotation controller 3 with a predetermined pressure needed for deciding the selection in a state of the selection screen of FIG. 6, in replay, the main control unit 24 determines that the selection of the selection item in the selection screen is decided based on the detection signal outputted from each of the pressure sensitive sensors 9a to 9d and the main control unit 24 executes the process according to the decided selection item.

That is, for example, when the selection item "BBB" is in the selected state as shown in the selection screen of FIG. 7 and when an operator pushes the rotation controller 3 with the pressure needed for deciding the selection, the selection of the selection item "BBB" is to be decided and the process according to the selection item "BBB" in which the selection is decided is to be executed.

According to the above described mobile phone 100 of the first embodiment, there is included the rotation controller 3 which receives the rotating operation of an operator so as to rotate around the axis, the rotation detection device (rotation detection unit 7, rotation detection program 243a, main CPU 241) for detecting the rotation speed and/or the rotation direction of the rotation controller 3, the pressure detection device (pressure sensitive sensors 9a to 9d, pressure detection program 243b, main CPU 241) for detecting intensity of the pressure in the axis direction to the rotation controller 3 and the rotation drive device (ultrasonic motor 8) for applying rotary force to the rotation controller 3. When a rotation of the rotation controller 3 is detected by the rotation detection device (rotation detection unit 7, rotation detection program 243a, main CPU 241), a predetermined tactile feeling is given to an operator via the rotation controller 3 by the rotation control device (rotation control program 243c, main CPU 241) by the rotation drive device (ultrasonic motor 8) executing at least one of the applying of rotary force in the normal rotation direction to the rotation controller 3 or the applying of rotary force in the reverse rotation direction to the rotation controller 3 in conjunction with the screen display in the display screen 23a of the display unit 23 to apply rotary force to the rotation controller 3.

That is, when an operator carries out a rotating operation to the rotation controller, a predetermined tactile feeling is given to an operator by the rotation drive device applying at least one of the rotary force in the normal rotation direction or the rotary force in the reverse rotation direction to the rotation controller in conjunction with the display screen in the display unit. Therefore, in an electronic device which includes the feeling applicator, various types of operational feelings in conjunction with the screen display in the display unit can be given to an operator.

Further, the rotation control device (rotation control program 243a, main CPU 241) changes the rotary force to be applied to the rotation controller 3 according to the rotation speed and/or the rotation direction of the rotation controller 3 which are detected by the rotation detection device (rotation detection unit 7, rotation detection program 243a, main CPU 241) and intensity of the pressure detected by the pressure detection device (pressure sensitive sensors 9a to 9d, pressure detection program 243b, main CPU 241).

That is, by changing the speed to rotate the rotation controller, the direction to rotate the rotation controller and the pressure to push the rotation controller, an operator can change the rotary force to be applied to the rotation controller by the drive of the rotation drive device.

Here, in the above described first embodiment, the optical rotation detection unit 7 formed of the ring shaped code wheel 71 and the photo interrupter 72 is exemplified as the rotation detection device for detecting the rotation angle of the rotation controller 3. However, the rotation detection unit 7 is an example of the rotation detection device, and any structure may be applied as long as the rotation angle of the rotation controller 3 can be detected. For example, a mechanical type (contact type) rotation detection device, a magnetic type rotation detection device, an electrostatic type rotation detection device in which position detection is carried out by capacitance change of an electrode or the like can be applied. Further, an absolute type rotary encoder which can detect the absolute position in addition to the amount of rotation and the rotation direction of the rotation controller 3 may be applied.

Moreover, in the above first embodiment, the description is given for the case where four pressure sensitive sensors are disposed at the back side of the PCB substrate. However, the layout position of the pressure sensitive sensors is not limited to this, and the pressure sensitive sensors may be disposed at any position as long as the pressure in the axis direction to the rotation controller 3 can be detected. Further, the number of the pressure sensitive sensors is not limited to four as long as the number the pressure sensitive sensors is one or more. Furthermore, the pressure sensitive sensors are not limited to the sensors which detect intensity of the pressure, and sensors such as tact switches which can detect whether a pressure of more than or equal to a predetermined value is applied or not may be used.

### [Second embodiment]

Next, a mobile phone of the second embodiment in which the present invention is applied will be described. Here, same symbols are used for the structures which are similar to that of the mobile phone 100 of the first embodiment and the descriptions are omitted. Descriptions are given only for the portions which are different from the mobile phone of the first embodiment.

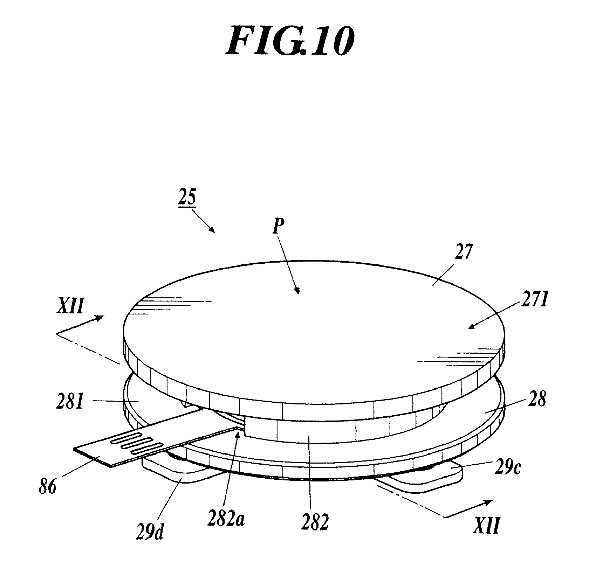

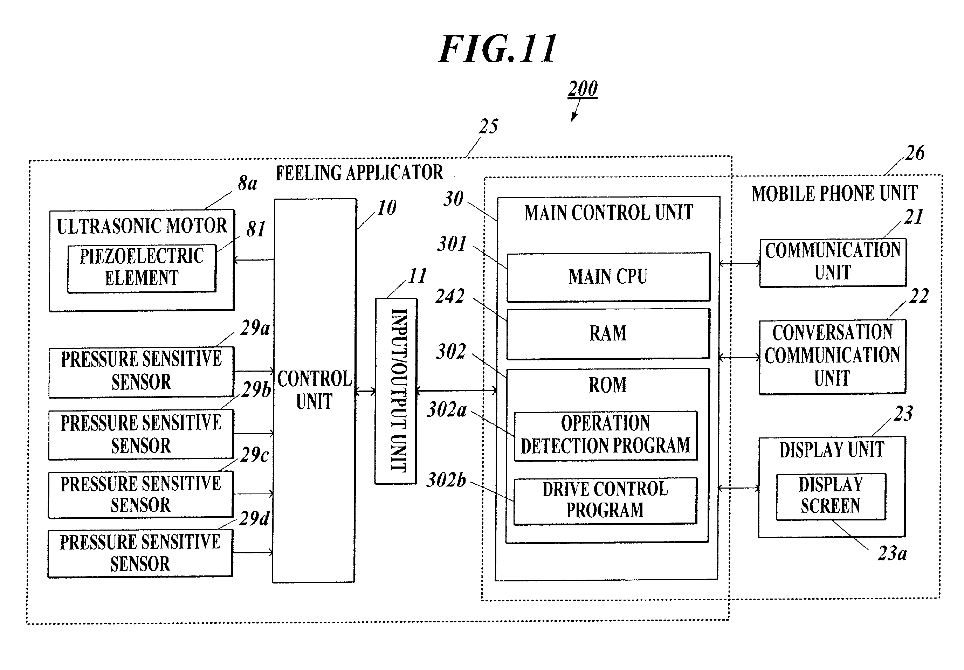

As shown in FIGS. 10 and 11, the mobile phone 200 of the second embodiment includes a feeling applicator 25 for an operator to carry out an input operation and a mobile phone unit 26 which is connected with the feeling applicator 25 and which is operated by the feeling applicator 25.

First, the feeling applicator 25 according to the second embodiment will be described.

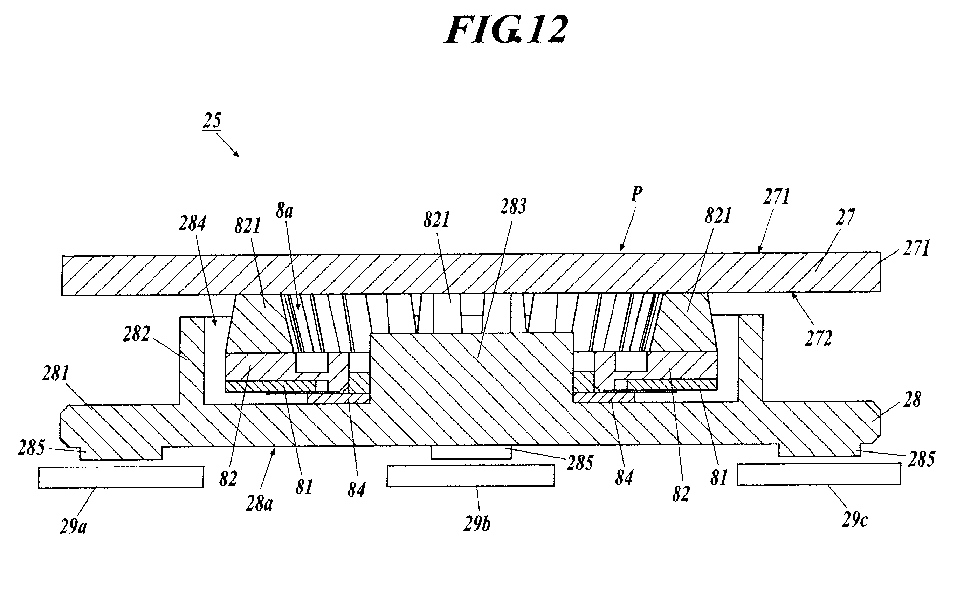

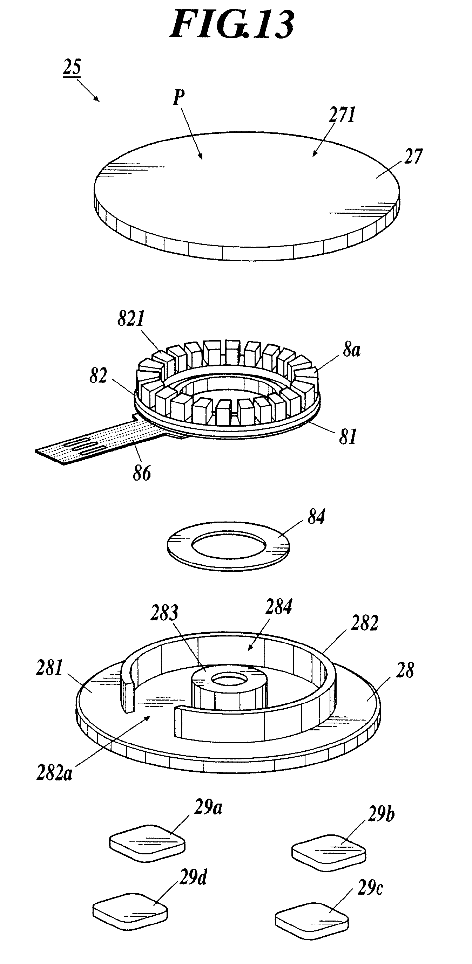

As shown in FIGS. 10 to 13, the feeling applicator 25 includes an operation board 27 for an operator to carry out an operation and a support base 28 which is provided at the lower side of the operation board 27, and an ultrasonic motor (feeling applying device) 8a for applying a tactile feeling to the operation board 27, a control unit 10 for controlling each part of the feeing applicator 25, an input/output unit 11 for carrying out sending and receiving of various types of signals with the mobile phone unit 26 and the like are disposed between the operation board 27 and the support base 28. Further, at the back side 28a of the support base 28, pressure sensitive sensors (detection device) 29a to 29d for detecting an operation in the operation board 27 are disposed.

The operation board 27 is formed in an approximately disk shape, and the operation board 27 forms the upper surface of the feeling applicator 25 by being provided at the upper side of the support base 28. The upper surface unit 271 of the operation board 27 is the operation surface P in which an operator carries out an operation and an operator carries out an input operation to the mobile phone unit 26 by putting a fingertip on the operation surface P of the operation board 27 and by moving the fingertip on the operation surface P along the circumference direction so as to draw circles.

The operation board 27 is formed of a soft material such as high polymer polyethylene, for example, and in time of input operation, the operation board 27 deflects downward according to the pressure of an operator pushing the operation board 27 and a vibration from the ultrasonic motor 8a and a force in the opposite direction of the progressive wave which is generated by the vibration are transmitted.

The support base 28 includes a pedestal 281 in an approximately disk shape which has approximately the same diameter as the operation board 27, a projection unit 282 having approximately C shape in a planar view which is disposed so as to project on the upper surface of the pedestal 281, a cylinder unit 283 in approximately cylinder shape which is provided at the center position of the pedestal 281 and a concave unit 284 in an approximately ring shape which is formed between the projection unit 282 and the cylinder unit 283. The support base 28 forms the bottom surface of the feeling applicator 25 by being provided at the lower side of the operation board 27.

Moreover, at the back side 28a of the support base 28, four contact units 285 are disposed so as to project downward at the positions corresponding to each of the pressure sensitive sensors 29a to 29d which are disposed in the back side 28a side of the support base 28. When the operation board 27 is pushed, the lower surfaces of the contact sections 285 are to contact the upper surfaces of the pressure sensitive sensors 29a to 29d, respectively.

The ultrasonic motor 8a includes piezoelectric elements 81, a ring shaped stator 82 and the like, and the ultrasonic motor 8a applies a tactile feeling to the operation board 27 by being driven by the control of the control unit 10.

The stator 82 is disposed in the approximately ring shaped concave unit 284 which is formed at the upper surface of the support base 28 and is fixed to the support base 28 by the double-faced tape 84 in a flat circular ring shape. At the upper portion of the stator 82, a plurality of convex units 821 are disposed along the circumference direction and further, a plurality of piezoelectric elements 81 for generating a vibration energy according to the application of electric voltage are disposed along the circumference direction of the stator 82. The convex units 821 which are formed on the upper surface of the stator 82 are provided so as to contact the back side 272 of the operation plate 27, and the convex units 821 transmit the progressive wave which is generated by the vibration of the stator 82 to the operation board 27. The stator 82 is connected with the control unit 10 by the FPC substrate 86 which is disposed so as to go through the cutout 282a formed in the projection unit 282 and a tactile feeling according to the drive signal outputted from the control unit 10 is given.

Further, when the drive voltage based on the drive signal is applied to the piezoelectric elements 81 from the control unit 10, the entire stator 82 vibrates based on the ultrasonic vibration of the piezoelectric elements 81 and the vibration (tactile feeling) by the progressive wave which is generated by the vibration of the stator 82 is transmitted to the operation board 27. Furthermore, by controlling the drive frequency of the drive signal which is to be applied to the piezoelectric elements 81, intensity and direction of the vibration to be given to the operation board 27 by the ultrasonic vibration of the piezoelectric elements 81 can be set freely.

Further, when the vibration is applied to the operation board 27 by the drive of the ultrasonic motor 8a, a predetermined tactile feeling is given to a fingertip of an operator which is placed on the upper surface unit 271 (operation surface P) of the operation board 27. Furthermore, because the operation board 27 is formed of a soft material as described above, the vibration applied by the ultrasonic motor 8a can be easily transmitted and the tactile feeling by the drive of the ultrasonic motor 8a can be given to the fingertip of an operator more clearly.

The double-faced tape 84 is formed of a gel material such as acrylic foam or a rubber material, for example, and the double-faced tape 84 realizes a function as a damper which absorbs noise which occurs when the stator 82 is driven.

The pressure sensitive sensors 29a to 29d are disposed at the back side 28a of the support base 28 in the circumference direction by having a space of 90° therebetween. Each of the pressure sensitive sensors 20a to 20d are connected to the control unit 10, and the pressure sensitive sensors 20a to 20d detects intensity of the pressure in the axis direction applied to the operation board 27 via the contact units 285 which are disposed at the back side 28a of the support base 28 by an operation of an operator and output the detected intensity of the pressure to the main control unit 3 via the control unit 10.

As for the pressure sensitive sensors 29a to 29d, pressure sensitive sensors of a resistive film type, a diffusion type, a film formation type, an electric capacity type, a mechanical type or the like can be used, for example.

Next, a mobile phone unit 26 according to the second embodiment will be described.

As shown in FIG. 2, the mobile phone unit 26 includes an antenna (omitted from the drawing), a communication unit 21 for sending and receiving wireless signals with an external device, a speaker and a microphone (both omitted from the drawing), a conversation communication unit 22 for carrying out input/output of sound, a display screen 23a, a display unit 23 for displaying various types of screens in the display screen 23a and a main control unit 30 for integrally controlling the entire mobile phone 200.

The main control unit 30 includes a main CPU (Central Processing Unit) 301, a RAM (Random Access Memory) 242, a ROM (Read Only Memory) 302 and the like, and the main control unit 30 is connected with the control unit 10. The main control unit 30 controls each part of the mobile phone unit 26 based on an input operation signal which is transmitted from the feeling applicator 25.

The main CPU 301 reads out the process programs and the like stored in the ROM 302 and expands the process programs in the RAM 242 and executes the process programs according to the input signal inputted form each part of the mobile phone unit 26 and the feeling applicator 25, and the main CPU 301 controls the entire mobile phone 200 by outputting a control signal to each part.

The ROM 302 stores the process programs, data and the like in advance, and for example, the ROM 302 stores an operation detection program 302a, a drive control program 302b and the like.

The operation detection program 302a is a program to make the main CPU 301 realize a function to detect an operation of an operator to the operation board 27. In the embodiment, the operation detection device is structured with the operation detection program 302a, the main CPU 301 and the pressure sensitive sensors 29a to 29d.

The drive control program 302b is a program to make the main CPU 301 realize a function to give a predetermined tactile feeling to an operator via the operation board 27 by applying a tactile feeling to the operation board 27 by the ultrasonic motor (feeling application device) 8a in conjunction with the screen display is the display screen 23a of the display unit 23 when the operation of an operator to the operation board 27 is detected in the execution of the operation detection program 302a. In the embodiment, the drive control device is structured with the drive control program 302b and the main CPU 301.

Further, in the embodiment, the feeling applicator 25 of the present invention is structured with the above mentioned ultrasonic motor 8a, pressure sensitive sensors 29a to 29d, control unit 10, input/output unit 11 and main control unit 30.

Here, a rotation drive process which is carried out by the execution of the operation detection program 302a and the drive control program 302b will be described and also, a specific description will be given for an operation of the mobile phone 200 of the embodiment.

When the selection screen in which a plurality of selection items are displayed is displayed in the display screen 23a which is provided in the mobile phone unit 26, an operator selects the targeted selection item among the selection items displayed in the selection screen by putting a fingertip on the operation surface P of the operation board 27 and by moving the fingertip on the operation surface P in the circumference direction so as to draw circles. Further, after selecting the targeted selection item by the operation on the operation screen P, an operator carries out an input operation to the mobile phone unit 26 by carrying out a deciding operation to decide on the selected selection item.

Here, when the operation is carried out on the operation screen P, the pressure detection signal which indicates the pressure to the operation board 27 is outputted from each of the pressure sensitive sensors 29a to 29d provided in the back side 28a side of the support base 28 to the main control unit 30 via the control unit 10 and the input/output unit 11. Further, in the main control unit 30, exist/not-exist of an operation in the operation board 27 is monitored based on the signal input from each of the pressure sensitive sensors 29a to 29d, and the main control unit 30 determines that the operation is carried out in the operation board 27 when the pressure detection signals indicating the pressure which are detected by the operation in the operation board 27 is inputted from the pressure sensitive sensors 29a to 29d. Thereafter, the main control unit 30 outputs the drive signal to the ultrasonic motor 8a to drive the ultrasonic motor 8a and applies a tactile feeling (vibration) to the operation board 27 so as to give a predetermined tactile feeling to an operator who operates the operation board 27.

Moreover, in time of driving of the ultrasonic motor 8a, the main control unit 30 carries out a predetermined arithmetic process to specify direction (clockwise direction/counter clockwise direction) of the operation in the operation surface P, speed (speed that a fingertip of an operator moves on the operation surface P) of the operation in the operation surface P and pressure in the axis direction to the operation board 27 based on the pressure detection signal outputted from each of the four pressure sensitive sensors 29a to 29d which are disposed in the back side 28a side of the support base 28. Further, the main control unit 30 changes the tactile feeling (vibration) to be applied to the operation board 27 based on the direction (clockwise direction/counter clockwise direction) of the operation, the speed of the operation and the pressure in the axis direction to the operation board 27 which are specified.

In particular, the main control unit 30 controls so as to apply a tactile feeling (vibration) in the same direction as the direction of operation or to apply a tactile feeling (vibration) in the opposite direction of the direction of operation in conjunction with the screen display in the display screen 23a according to the direction of operation in the operation surface P which is specified based on the pressure detection signals form the pressure sensitive sensors 29a to 29d. Further, the main control unit 30 controls so as to apply vibration in shorter cycle to the operation board 27 as the speed of the operation in the operation surface P becomes faster according to the speed of the operation in the operation surface P which is specified based on the pressure detection signals from the pressure sensitive sensors 29a to 29d. Furthermore, the main control unit 30 controls so as to apply greater tactile feeling (vibration) to the operation board 27 as the pressure to the operation board 27 in the axis direction becomes greater according to the pressure in the axis direction to the operation board 27 which is specified based on the pressure detection signals from the pressure sensitive sensors 29a to 29d.

Moreover, the main control unit 30 executes a predetermined arithmetic process to specify an operation position (that is, position of a fingertip of an operator) in the operation surface P based on the pressure detection signal outputted from each of the four pressure sensitive sensors 29a to 29d. Further, the main control unit 30 monitors whether the specified operation position in the operation surface P is at the selection angle corresponding to the selection item which can be selected in the selection screen or not. When the operation position in the operation screen P is at the selection angle corresponding to the selection item which can be selected in the selection screen, the main control unit 30 generates a switching signal to switch the selection of selection item in the selection screen and executes a display control to switch the selection of selection item in the selection screen which is displayed in the display screen 23a by outputting the generated switching signal to the display unit 23.

In such way, in the embodiment, by an operator carrying out an operation of moving his or her fingertip along the circumference direction of the operation board 27 on the operation surface P of the feeling applicator 25, the selection items which are displayed in the display screen 23a can be selected and the tactile feeling (vibration) by the drive of the ultrasonic motor 8a can be applied to the operation board 27 in conjunction with the operation on the operation surface P. Further, by changing the direction of operation on the operation surface P, the speed of operation on the operation surface P and the pressure to the operation board 27, the direction, cycle and intensity of the tactile feeling (vibration) to be applied to the operation board 27 by the ultrasonic motor 8a can be changed.

Here, a specific example of the selection process of the selection item and the feeling application process to the operation board 27 will be described by using FIG. 6 similarly to the first embodiment.

FIG. 6 is an example of the selection screen which is displayed in the display screen 23a of the display unit 23. In the selection screen of FIG. 6, twelve selection items are displayed so as to be arranged in a ring shape by having equal spaces therebetween. Further, the selection item (selection item "AAA" in FIG. 6) which is selected among the twelve selection items is to be displayed so as to be larger than other selection items.

Moreover, in the selection screen of FIG. 6, when an operator slides his or her fingertip on the operation surface P along the circumference direction so as to draw circles, selection of selection item is switched in order according to the operation position in the selection screen.

At this time, the ultrasonic motor 8a is driven by the control of the main control unit 30, and a tactile feeling is applied to the operation board 27. In time of application of a tactile feeling to the operation board 27, the main control unit 30 executes the control of applying a tactile feeling (vibration) in the normal rotation direction to the operation board 27 or the control of applying a tactile feeling (vibration) in the reverse rotation direction to the operation board 27 by the ultrasonic motor 8a according to the screen display in the selection screen which is displayed in the display screen 23a. Thereby, the main control unit 30 gives a tactile feeling according to the screen display to an operator.

In particular, in a case where the selection item which is the destination to be switched to is positioned below than the original selection item in the selection screen, the cyclical tactile feeling (vibration) in the same direction as the direction of operation on the operation surface P is applied to the operation board 27.

That is, in a case where the selection item which is the destination to be switched to is positioned below than the original selection item and where an operator is moving his or her fingertip in the clockwise direction on the operation surface P, a tactile feeling (vibration) in the normal rotation direction is applied to the operation board 27. Further, in a case where the selection item which is the destination to be switched to is positioned below than the original selection item and where an operator is moving his or her fingertip in the counter clockwise direction on the operation surface P, a tactile feeling (vibration) in the reverse rotation direction is applied to the operation board 27.

In such way, when the selection switching direction in the selection screen is downward, a layer of air is formed between a fingertip of an operator and the operation board 27 to give a slippery tactile feeling and a smooth tactile feeling to the fingertip of an operator by vibrating the operation board 27 by the ultrasonic wave in the same direction as the direction of operation on the operation surface P. Thereby, a sense of tracing something slippery can be given to an operator.

Moreover, in a case where the selection item which is the destination to be switched to is positioned upper than the original selection item in the selection screen, a cyclical tactile feeling (vibration) in the opposite direction of the direction of operation on the operation surface P is applied to the operation board 27.

That is, in a case where the selection item which is the destination to be switched to is upper than the original selection item and where an operator is moving his or her fingertip on the operation surface P in the counter clockwise direction, a tactile feeling (vibration) in the reverse rotation direction is applied to the operation board 27. Further, in a case where the selection item which is the destination to be switched to is upper than the original selection item and where an operator is moving his or her fingertip on the operation surface P in the clockwise direction, a tactile feeling (vibration) in the normal rotation is applied to the operation board 27.

In such way, when the selection switching direction in the selection screen is upward, a continuous vibration is generated by the ultrasonic wave to the operation board 27 in the opposite direction of the direction of operation on the operation surface P. Thereby, a rough tactile feeling and a bumpy tactile feeling can be given to a fingertip of an operator.

In such way, even when an operator moves his or her fingertip in either of the clockwise direction and the counter clockwise direction, the direction of the tactile feeling (vibration) to be applied to the operation board 27 is automatically switched according to the direction (upward direction/downward direction) of the selection switching in the screen display. Therefore, the tactile feeling which matches to the screen display can be always given to an operator without being conscious about the direction (direction of operation) in which an operator moves his or her fingertip.

Moreover, by changing the speed of operation on the operation surface P, an operator can adjust the cycle of the tactile feeling (vibration) to be applied to the operation board 27 by the drive of the ultrasonic motor 8a.

For example, when an operator increases the speed of operation on the operation surface P, in replay, the main control unit 30 determines that the operation speed is increased based on the pressure detection signal outputted from each of the pressure sensitive sensors 29a to 29d and the main control unit 30 controls the ultrasonic motor 8a so as to apply a tactile feeling (vibration) in shorter cycle to the operation board 27.

Further, for example, when an operator decreases the speed of operation on the operation surface P, in replay, the main control unit 30 determines that the operation speed is decreased based on the pressure detection signal outputted from each of the pressure sensitive sensors 29a to 29d and the main control unit 30 controls the ultrasonic motor 8a so as to apply a tactile feeling (vibration) in longer cycle to the operation board 27.

In such way, by an operator changing the speed of sliding his of her fingertip on the operation surface P, cycle of the tactile feeling (vibration) to be applied to the operation board 27 is changed and the tactile feeling of the operation surface P can be changed.

Here, it can be structured so as to change intensity of the vibration to the applied to the operation board 27 according to the speed of operation on the operation surface P.

Further, by changing the pressure to the operation board 27, an operator can adjust intensity of the tactile feeling (vibration) to be applied to the operation board 27 by the drive of the ultrasonic motor 8a.

For example, when an operator pushes the operation board 27 with a greater force, in replay, the main control unit 30 determines that the pressure in the axis direction to the operation board 27 is increased based on the detection signal outputted from each of the pressure sensitive sensors 29a to 29d and the main control unit 30 controls the ultrasonic motor 8a so as to apply a great tactile feeling to the operation board 27.

Further, for example, when an operator pushes the operation board 27 with a smaller force, in replay, the main control unit 30 determines that the pressure in the axis direction to the operation board 27 is reduced based on the detection signal outputted from each of the pressure sensitive sensors 29a to 29d and the main control unit 30 controls the ultrasonic motor 8a so as to apply a smaller tactile feeling (vibration) to the operation board 27.

In such way, by an operator changing the force to push the operation board 27, intensity of the tactile feeling (vibration) to be applied to the operation board 27 is changed and the tactile feeling of the operation surface P can be changed.

Here, it can be structured so as to change the cycle of the tactile feeling (vibration) to be applied to the operation board 27 according to intensity of the pressure in the axis direction to the operation board 27.

Moreover, after selecting the targeted selection item by the operation on the operation surface P, an operator can decide the selection by pushing the operation board 27 at a predetermined pressure.

For example, when an operator pushes the operation board 27 at a predetermined pressure needed for deciding the selection in the state of the selection screen of FIG. 6, in replay, the main control unit 30 determines that the selection of the selection item in the selection screen is decided based on the detection signal outputted from each of the pressure sensitive sensors 29a to 29d and the main control unit 30 executes the process according to the decided selection item.

According to the above described mobile phone 200 of the second embodiment, there is included the operation board 27 formed of a soft material, the feeling application device (ultrasonic motor 8a) for applying the tactile feeling to the operation board 27 and the detection device (operation detection program 302a, main CPU 301, pressure sensitive sensors 29a to 29d) for detecting an operation by an operator to the operation board 27. Further, by applying a tactile feeling to the operation board 27 by the feeling application device (ultrasonic motor 8a) in conjunction with the screen display in the display screen 23a of the display unit 23 when an operation of an operator to the operation board 27 is detected by the detection device, a predetermined tactile feeling is given to an operator via the operation board 27 by the drive control device (drive control program 302a, main CPU 301).

That is, when an operation of an operator is carried out in the operation board, a tactile feeling is applied to the operation board by the feeling application device in conjunction with the display screen of the display unit and a predetermined tactile feeling is given to an operator. Therefore, in an electronic device in which the feeling applicator is included, various types of operational feelings in conjunction with the screen display in the display unit can be given to an operator.

Here, in the above second embodiment, the case where four pressure sensitive sensors 29a to 29d are disposed in the back side 28a side of the support base 28 is described. However, the layout position of the pressure sensitive sensors 29a to 29d is not limited to this. The pressure sensitive sensors 29a to 29d may be disposed at any positions as long as the operation position in the operation board 27, the pressure in the axis direction to the operation board 27 or the like can be detected. Further, the number of the pressure sensitive sensors 29a to 29d is not limited to four, and the number of the pressure sensitive sensors may be any number as long as the number of the pressure sensitive sensors is three or more. Furthermore, the pressure sensitive sensors 29a to 29d are not limited to sensors for detecting intensity of pressure, and a sensor such as a tact switch which can detect whether a pressure of more than or equal to a predetermined value is applied or not may be used.

Here, the scope of the present invention is not limited to the above described each embodiment. Various modifications and changes in design can be carried out within the scope of the present invention.

For example, in the above embodiment, a mobile phone is exemplified as an electronic device in which the feeling applicator according to the present invention is included. However, the feeling applicator of the present invention can be applied to any electronic device as long as input operation by the feeling applicator can be carried out, not being limited to the mobile phone. For example, the feeling applicator of the present invention can be applied to other portable terminal devices such as a portable audio player, a PDA (Personal Digital Assistance) and the like, an AV devices such as a television receiver and the like, a personal computer and the like. Further, the feeling applicator may be incorporated in an electric device in advance. Furthermore, the feeling applicator may be used as a stand-alone external device by being connected with an electronic device.

Moreover, in the above embodiment, an ultrasonic motor is exemplified as a rotation drive device and a feeling application device. However, an ultrasonic motor is an example of a rotation drive device and an feeling application device, and any structure may be used as long as rotary force can be applied to the rotation controller or the operation board. For example, an electrostatic actuator which is driven by using attraction and repulsion of electrostatic charges as power, an electromagnetic actuator which is driven by using the force by an interaction between a magnetic field and electric power, structures using a magnetostriction actuator, a hydraulic cylinder, an air cylinder and the like may be used. Further, as a drive control in the rotation drive device and the feeling application device, a control in which power of an actuator is transmitted to the device to be driven such as the rotation controller and the like as it is may be applied. Also, a stepping motor which operates in proportion to the drive pulse number or the like may be applied. Furthermore, the actuator may be driven by rotating the device to be driven, or a linear actuator which is driven by moving the device to be drive linearly may be applied.

Moreover, the combination of rotary force to be applied to the rotation controller 3 is not limited to the specific examples exemplified in the embodiments. A rotary force in the normal rotation direction and a rotary force in the reverse rotation direction can be combined freely and can be applied.

Further, in the above embodiment, the description is given for the case where the direction of rotary force to be applied to the rotation controller 3 and the operation board 27 is automatically switched according to the direction of the operation by an operation in the rotation controller 3 and the operation board 27. However, it may be structured so that the direction in which rotary force is applied is not switched according to the direction of the operation.

According to a first aspect of the preferred embodiments of the present invention, there is provided a feeling applicator including a rotation controller for receiving a rotating operation of an operator so as to rotate around an axis, a rotation detection unit for detecting a rotation of the rotation controller, a rotation drive unit for applying a rotary force to the rotation controller and a rotation control unit for applying a predetermined tactile feeling to the operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when the rotation of the rotation controller is detected by the rotation detection unit.

Preferably, the rotation detection unit detects a rotation speed and/or a rotation direction of the rotation controller, and the rotation control unit changes the rotary force to be applied to the rotation controller according to the rotation speed and/or the rotation direction of the rotation controller detected by the rotation detection unit.

Preferably, the feeling applicator further includes a pressure detection unit for detecting an intensity of a pressure in an axis direction to the rotation controller, and the rotation control unit changes the rotary force to be applied to the rotation controller according to the intensity of the pressure detected by the pressure detection unit.

According to a second aspect of the preferred embodiments of the present invention, there is provided a feeling applicator including an operation board formed of a soft material, a feeling applicator for applying a tactile feeling to the operation board, a detection unit for detecting an operation of an operator to the operation board and a drive control unit for applying a predetermined tactile feeling to the operator via the operation board by applying the tactile feeling to the operation board by the feeling applicator in conjunction with a screen display in a display screen of a display unit when the operation of the operator to the operation board is detected by the detection unit.

According to a third aspect of the preferred embodiments of the present invention, there is provided an electronic device including the feeling applicator and the display unit.

According to a fourth aspect of the preferred embodiments of the present invention, there is provided an electronic device including a display unit, a rotation controller for receiving a rotating operation of an operator so as to rotate around an axis, a rotation detection unit for detecting a rotation speed and/or a rotation direction of the rotation controller, a pressure detection unit for detecting an intensity of a pressure in an axis direction to the rotation controller, a rotation drive unit for applying a rotary force to the rotation controller and a rotation control unit for applying a predetermined tactile feeling to an operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when a rotation of the rotation controller is detected by the rotation detection unit, and the rotation control unit changes the rotary force to be applied to the rotation controller according to the rotation speed and/or the rotation direction of the rotation controller detected by the rotation detection unit and the intensity of the pressure detected by the pressure detection unit.

According to a fifth aspect of the preferred embodiments of the present invention, there is provided an electric device including a display unit, an operation board formed of a soft material, a feeling application unit for applying a tactile feeling to the operation board, a detection unit for detection an operation of an operator to the operation board and a drive control unit for applying a predetermined tactile feeling to the operator via the operation board by applying the tactile feeling to the operation board by the feeling application unit in conjunction with a screen display in a display screen of the display unit when the operation of the operator to the operation board is detected by the detection unit.

Although various exemplary embodiments have been shown and described, the invention is not limited to the embodiments shown. Therefore, the scope of the invention is intended to be limited solely by the scope of the claims that follow.

## Claims

1. A feeling applicator, comprising:
a rotation controller for receiving a rotating operation of an operator so as to rotate around an axis;
a rotation detection unit for detecting a rotation of the rotation controller;
a rotation drive unit for applying a rotary force to the rotation controller; and
a rotation control unit for applying a predetermined tactile feeling to the operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when the rotation of the rotation controller is detected by the rotation detection unit.

2. The feeling applicator as claimed in claim 1,
wherein
the rotation detection unit detects a rotation speed and/or a rotation direction of the rotation controller, and
the rotation control unit changes the rotary force to be applied to the rotation controller according to the rotation speed and/or the rotation direction of the rotation controller detected by the rotation detection unit.

3. The feeling applicator as claimed in claim 1 or 2 further comprising a pressure detection unit for detecting an intensity of a pressure in an axis direction to the rotation controller, wherein
the rotation control unit changes the rotary force to be applied to the rotation controller according to the intensity of the pressure detected by the pressure detection unit.

4. A feeling applicator, comprising:
an operation board formed of a soft material;
a feeling applicator for applying a tactile feeling to the operation board;
a detection unit for detecting an operation of an operator to the operation board; and
a drive control unit for applying a predetermined tactile feeling to the operator via the operation board by applying the tactile feeling to the operation board by the feeling applicator in conjunction with a screen display in a display screen of a display unit when the operation of the operator to the operation board is detected by the detection unit.

5. An electronic device, comprising:
the feeling applicator of any one of claims 1 to 4 and the display unit.

6. An electronic device, comprising:
a display unit;
a rotation controller for receiving a rotating operation of an operator so as to rotate around an axis;
a rotation detection unit for detecting a rotation speed and/or a rotation direction of the rotation controller;
a pressure detection unit for detecting an intensity of a pressure in an axis direction to the rotation controller;
a rotation drive unit for applying a rotary force to the rotation controller; and
a rotation control unit for applying a predetermined tactile feeling to an operator via the rotation controller by applying the rotary force to the rotation controller by executing at least one of an application of the rotary force in a normal rotation direction or an application of the rotary force in a reverse rotation direction to the rotation controller by the rotation drive unit in conjunction with a screen display in a display screen of a display unit when a rotation of the rotation controller is detected by the rotation detection unit, wherein
the rotation control unit changes the rotary force to be applied to the rotation controller according to the rotation speed and/or the rotation direction of the rotation controller detected by the rotation detection unit and the intensity of the pressure detected by the pressure detection unit.

7. An electric device, comprising:
a display unit;
an operation board formed of a soft material;
a feeling application unit for applying a tactile feeling to the operation board;
a detection unit for detection an operation of an operator to the operation board; and
a drive control unit for applying a predetermined tactile feeling to the operator via the operation board by applying the tactile feeling to the operation board by the feeling application unit in conjunction with a screen display in a display screen of the display unit when the operation of the operator to the operation board is detected by the detection unit.
